# EUROPEAN PATENT SPECIFICATION

(11) **EP 1 486 353 B1**
(45) Date of publication and mention of the grant of the patent: **11.01.2012**
(21) Application number: 04013813.3
(22) Date of filing: 11.06.2004
(51) Int. Cl.: B60B 27/00

(54) **Bearing apparatus for a wheel of vehicle**
Lagervorrichtung für ein Fahrzeugrad
Dispositif de palier pour une roue de véhicule

(30) Priority: 11.06.2003 JP 2003166068
(43) Date of publication of application: 15.12.2004
(73) Proprietor: NTN Corporation, Osaka (JP)
(72) Inventor: Hirai, Isao, Iwata-shi Shizuoka-ken (JP); Takubo, Takayasu, Iwata-shi Shizuoka-ken (JP); Yoshida, Kazuhiko, Iwata-shi Shizuoka-ken (JP)
(74) Representative: Cohausz & Florack

(56) References cited:
- EP-A- 0 854 303
- US-A1- 2001 046 339
- US-A1- 2002 072 421
- US-A1- 2003 103 705
- US-A1- 2005 141 798
- US-B1- 6 422 758

## Description

### BACKGROUND OF THE INVENTION

### Field of the Invention

The present invention relates to a bearing apparatus for a wheel of vehicle for supporting the wheel of vehicle such as an automobile, and more particularly to a bearing apparatus for a wheel of vehicle having a hub wheel of improved strength and durability under a condition suffered from rotary bending.

### Description of Background Art

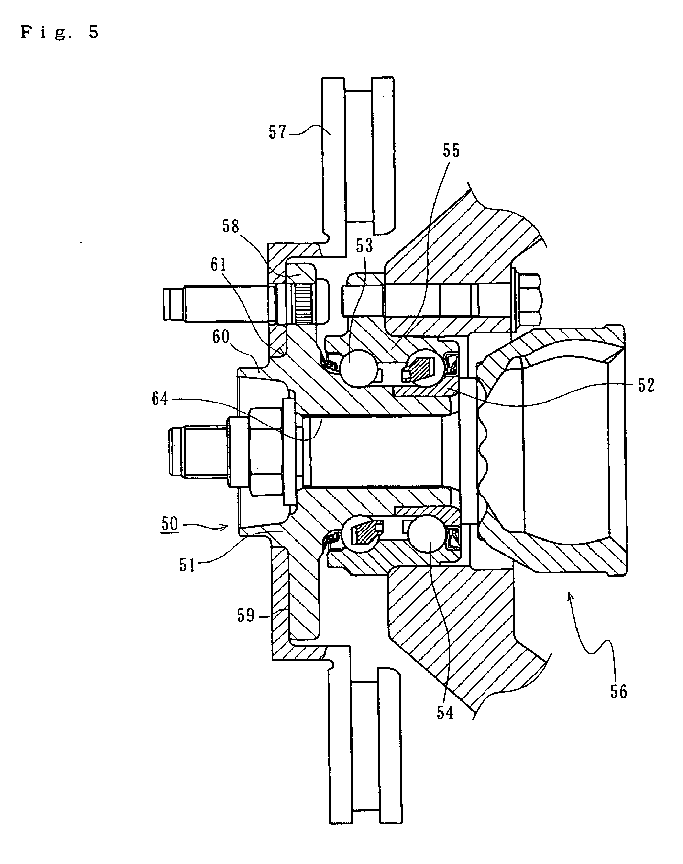

The bearing apparatus for a wheel of vehicle includes various types in accordance with applications for a driven wheel as well as a driving wheel. For example, a conventional bearing apparatus for a driving wheel of vehicle shown in Fig. 5 has essential parts such as an inner member 50 including a hub wheel 51 and an inner ring 52; double row rolling elements 53 and 54; an outer member 55; and a constant velocity universal joint 56 for transmitting an output of engine to the hub wheel 51. In such a bearing apparatus for a driving wheel of vehicle, the hub wheel 51 for supporting a wheel (not shown) and a brake rotor 57 is made of medium carbon steel for machine structure such as S53C in view of easiness of forging, cutting and heat treatment, and economy in production. The hub wheel 51 and the wheel mounting flange 58 have been ribbed and thinned to make them small and light so as to improve the fuel consumption as well as the driving stability. However since the mechanical strength of such a miniaturized hub wheel 51 itself nears to the fatigue limit of the medium carbon steel forming the hub wheel 51, it is difficult to further proceed the miniaturization and lightening of the hub wheel 51.

In the hub wheel 51 in which the wheel mounting flange 58 is thinned for the purpose of lightening, special countermeasure is required for dealing with the concentration of rotary bending stress at a corner 61 extending from a brake rotor mounting surface 59 toward a cylindrical pilot portion 60. Although it is possible to reduce the generated stress by enlarging the dimension of the corner 61 i.e. the radius of curvature thereof, it is also limited by interference due to the brake rotor 57 to be mounted thereon.

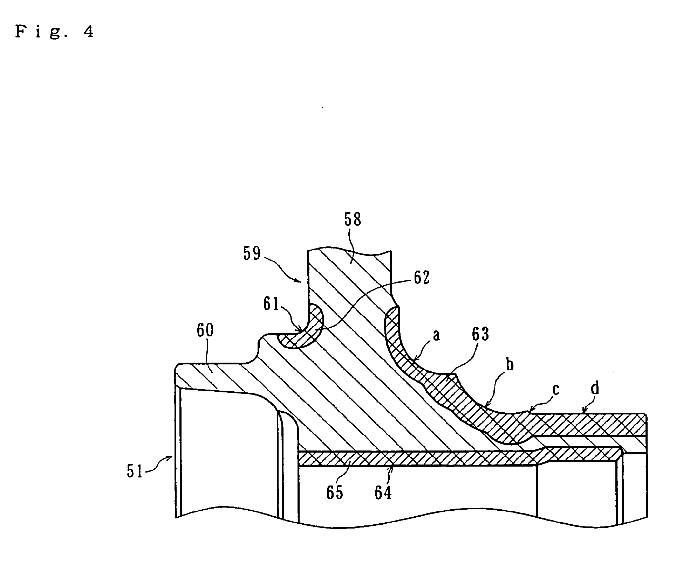

The applicant of the present application has proposed a bearing apparatus for a wheel of vehicle which can increase the strength of the hub wheel 51 as well as lighten it without changing the configuration and dimension of the wheel mounting flange 58. In this bearing apparatus, as shown in Fig. 4, the corner 61 of the flange 58 of the hub wheel 51 is formed with a surface hardened layer 62 by the high frequency induction hardening. This enables to strengthen the corner 61 of the flange 58 at which the rotary bending strength is most weakened and thus to increase the durability of the hub wheel 51.

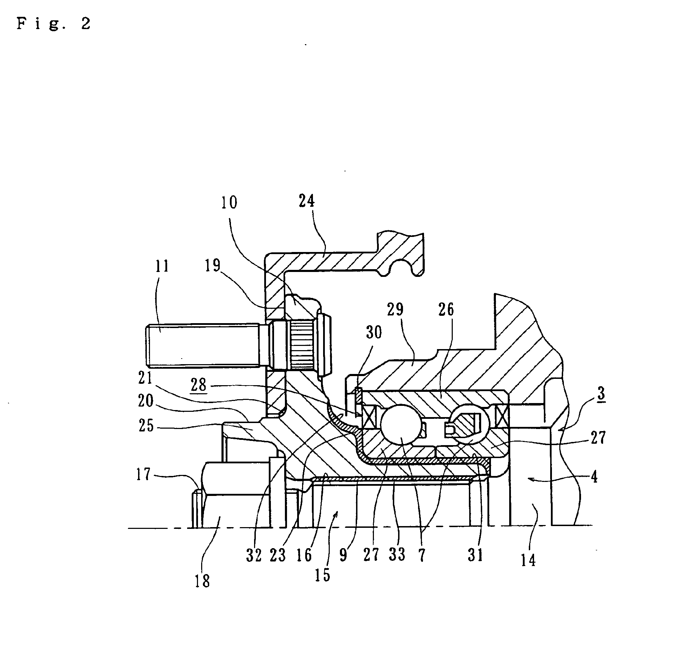

Portions other than the corner 61 such as a seal land portion to which a seal lip of a seal fitted into the outboard side end of the outer member 55 (not shown in Fig. 4) as well as portions "a" · "d" are also formed with a surface hardened layer 63 by the induction hardening. In addition a serrated portion 64 is formed with a surface hardened layer 65. Thus the rotary bending strength, wear resistance and rolling fatigue life required for these portions "a" - "d" can be improved (see a following patent document 1). Patent document 1: Japanese Laid-open Patent Publication No. 87008/2002, pages 4 and 5 and Fig.2).

Although it is possible, according to the bearing apparatus for a wheel of vehicle of the prior art, to increase the strength of the hub wheel 51 as well as to lighten it without changing the configuration and dimension of the wheel mounting flange 58 by forming the surface hardened layer 62 at the corner 61 of the flange 58 of the hub wheel, new problems are caused such that the wheel mounting flange 58 is deformed by the heat treatment in the high frequency induction hardening step and thus a large surface run-out of the brake rotor mounting surface 59 is caused. The problem of surface run-out is also caused by the thinning of the wheel mounting flange 58. The surface run-out of the brake rotor mounting surface 59 gives influence to the run-out of the brake rotor 57 and thus causes a brake judder which impairs the driving stability and the driving feeling. In this case, although it is also conceivable to further cut the brake rotor mounting surface 59 by lathe turning after heat treatment of the hub wheel 51 to modify the deformed portion so as to improve the surface run-out, there is also remained a dilemma that a slight step is caused between the surface hardened layer 62 of the corner 61 and the unhardened brake rotor mounting surface 59 because of a difference in hardness therebetween.

Further, a bearing apparatus according to the preamble of claim 1 is known from US 2003/103705 A1.

### SUMMARY OF THE INVENTION

It is, therefore, an object of the present invention to provide a bearing apparatus for a wheel of vehicle which can increase the strength and durability of the hub wheel under the condition of rotary bending as well as can lighten it without changing the configuration and dimension of the wheel mounting flange and also without causing the surface run-out thereof.

For achieving the object of the present invention, there is provided, according to claim 1, a bearing apparatus for a wheel of vehicle comprising an outer member formed with double row outer raceway surfaces on the inner peripheral surface thereof, an inner member formed with double row inner raceway surfaces arranged oppositely to the double row outer raceway surfaces, double row rolling elements contained freely rollably between the outer and inner raceway surfaces respectively of the outer and inner members, and a wheel mounting flange formed integrally with either one of the outer member or the inner member wherein at least one of the outer member and the inner member on which the wheel mounting flange is formed is heat treated and their raceway surfaces are hardened by quenching to a predetermined surface hardness characterized in that the inner member comprises a hub wheel of which all surface is heat treated after forging.

It is possible to increase the strength and durability against the rotary bending fatigue by heat treating at least one of the outer and inner members having the wheel mounting flange and by quench hardening the raceway surfaces of the outer and/or inner members to a predetermined surface hardness without changing the configuration and dimension of the wheel mounting flange as well as currently used manufacturing method and equipment.

According to the invention of claim 2, since the inner member comprises a hub wheel having the wheel mounting flange and an inner ring press fitted onto the hub wheel, an inner raceway surface corresponding to one of the double row outer raceway surfaces of the outer member is directly formed on the outer peripheral surface of the hub wheel, and another inner raceway surface corresponding to the other of the double row outer raceway surfaces of the outer member is formed on the outer peripheral surface of the inner ring, it is possible to miniaturize and lighten the bearing apparatus as well as to increase the strength and durability of the heat treated hub wheel.

According to the invention of claim 3, since the surface hardness of the base portion of outboard side of the wheel mounting flange is set below 35 HRC, it is possible to improve easiness of cutting, to suppress the deformation due to heat treatment, and to prevent deterioration the accuracy of surface run-out of the wheel mounting flange caused by the deformation thereof due to heat treatment. In addition, since hub bolt apertures are remained not hardened, it is possible to prevent serrations of hub bolts from being broken by the bolt apertures.

According to the invention of claim 4, the end of inboard side of the hub wheel is plastically deformed radially outward to form a caulked portion for axially securing the inner ring relative to the hub wheel. Since this so-called self-retaining structure does not require to control the amount of preload applied to the inner ring by fastening nuts as usually carried out in the prior art it is possible to obtain easiness of its assembly to a body of vehicle and to maintain the amount of preload for a long term.

It is preferable, as defined in claim 5, that the surface hardness of the caulked portion is set below 25 HRC by tempering it after the heat treatment thereof. This makes it possible to suppress hardness variation in the caulked portion as compared with portions not heat treated after forging as in the prior art. In addition it is possible to improve its quality with reducing micro-crack which would be generated by plastic working.

According to the invention of claim 6, since seals are arranged on two ends of the outer member, the base portion of inboard side of the wheel mounting flange is formed with a seal land portion to which a seal lip of the seal of outboard side slidably contacts, and the surface hardness of the seal land portion is set at 54 - 64 HRC, it is possible to improve the wear resistance, to increase the mechanical strength against the rotary bending load applied to the wheel mounting flange, and thus to further improve the strength and durability of the hub wheel.

According to the invention of claim 7, the inner member and the outer member to be heat treated are made of medium carbon steel including carbon of 0.40 ∼ 0.80 % by weight. This is advantageous in easiness of forging, cutting, heat treatment or economy and especially in high frequency induction hardening.

According to the invention a bearing apparatus for a wheel of vehicle can comprise an outer member formed with double row outer raceway surfaces on the inner peripheral surface thereof, an inner member formed with double row inner raceway surfaces arranged oppositely to the double row outer raceway surfaces, double row rolling elements contained freely rollably between the outer and inner raceway surfaces respectively of the outer and inner members, and a wheel mounting flange formed integrally with either one of the outer member or the inner member wherein the base portion of outboard side of the wheel mounting flange is heat treated and its surface hardness is set below 40 HRC in order to eliminate consideration of the easiness of cutting by lathe turning, and to increase the mechanical strength of the base portion.

In case the inner member comprises a hub wheel having the wheel mounting flange and an inner ring press fitted onto the hub wheel, an inner raceway surface correspondingly opposed to one of the double row outer raceway surfaces of the outer member is directly formed on the outer peripheral surface of the hub wheel, and another inner raceway surface correspondingly opposed to the other of the double row outer raceway surfaces of the outer member is formed on the outer peripheral surface of the inner ring, it is possible to miniaturize and lighten the bearing apparatus and also to increase the strength of the base portion of inboard side of the wheel mounting flange.

The end of inboard side of the hub wheel can be plastically deformed radially outward to form a caulked portion for axially securing the inner ring relative to the hub wheel. Thus there is provided a so-called self-retaining structure.

According to the invention of claim 8, since seals are arranged on two ends of the outer member, the base portion of inboard side of the wheel mounting flange is formed with a seal land portion to which a seal lip of the seal of outboard side slidably contacts, and the surface hardness of the seal land portion is set at 54 ∼ 64 HRC, it is possible to improve the wear resistance, to increase the mechanical strength against the rotary bending load applied to the wheel mounting flange, and further to improve the strength and durability of the hub wheel.

According to the invention of claim 9, the inner member and the outer member to be heat treated are made of medium carbon steel including carbon of 0.40 ∼ 0.80 % by weight. This structure is advantageous in easiness of forging, cutting, heat treatment or economy and especially in high frequency induction hardening.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view showing a first embodiment of the bearing apparatus for a wheel of the present invention;
Fig. 2 is a longitudinal section view showing a second embodiment of the bearing apparatus for a wheel of the present invention;
Fig. 3 is a longitudinal section view showing a third embodiment of the bearing apparatus for a wheel of the present invention;
Fig. 4 is a longitudinal section view of the bearing apparatus for a wheel of the prior art; and
Fig. 5 is a longitudinal section view of another bearing apparatus for a wheel of the prior art.

### DESCRIPTION OF THE PREFERRED EMBODIMENTS

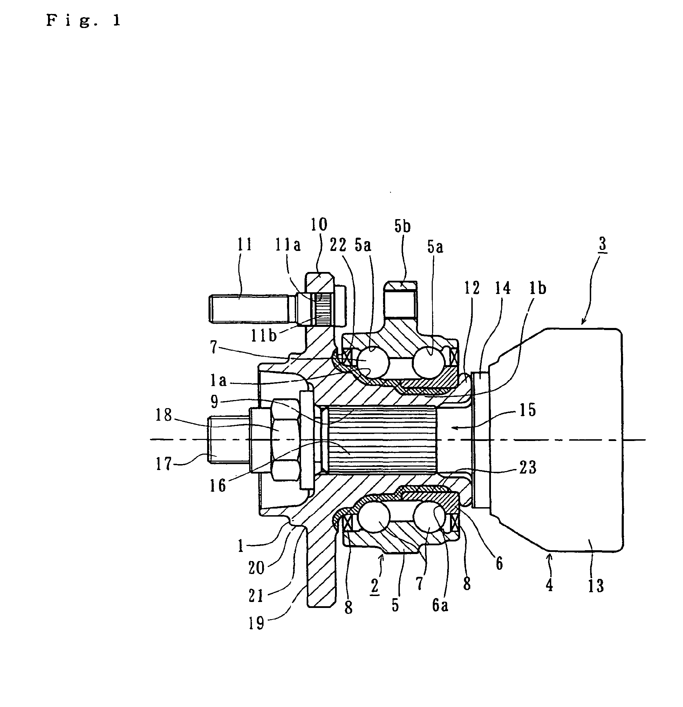

Fig. 1 shows a first embodiment of a bearing apparatus for a wheel of vehicle of the present invention. In the description below, a term "outboard side" of the apparatus denotes a side which is positioned outside of the vehicle body and a term "inboard side" of the apparatus denotes a side which is positioned inside of the body when the bearing apparatus is mounted on the vehicle body.

The illustrated bearing apparatus is that used for a driving wheel of vehicle wherein a hub wheel 1 and a double row rolling bearing 2 are assembled into a unit and has a structure wherein an outer joint member 4 of the constant velocity universal joint 3 is fitted into the hub wheel 1 via serration engagement so as to transmit a torque therebetween.

The double row rolling bearing 2 comprises, as its main components, an outer member 5 wherein double row outer raceway surfaces 5a and 5a are formed on its inner peripheral surface and a body mounting flange 5b to be mounted on a body (not shown) of vehicle is integrally formed on its outer peripheral surface; the hub wheel 1 wherein one of double row inner raceway surfaces correspondingly opposed to the outer raceway surfaces 5a and 5a, i.e. inner raceway surface 1a is directly formed on its outer periphery surface; an inner ring 6 press fitted onto the stepped portion of small diameter 1b of the hub wheel 1 and formed with another inner raceway surface 6a; and double row rolling elements 7 and 7 contained between the outer raceway surfaces 5a and 5a and the inner raceway surfaces 1a and 6a. The rolling elements 7 and 7 are freely rollably held by cages (not shown). Seals 8 and 8 are arranged at the ends of the double row rolling bearing 2 to prevent leak of grease contained within the bearing 2 as well as ingress of rain water or dusts.

The hub wheel 1 is formed with a serration (or spline) 9 for torque transmission on its inner peripheral surface and integrally formed with a wheel mounting flange 10 for mounting a wheel (not shown) on its outer peripheral surface at the end of outboard side. Hub bolts 10 for securing the wheel on the flange 10 are equidistantly arranged along the periphery of the flange 10.

In this bearing apparatus, a caulked portion 12 is formed by plastically deforming radially outward the end of the stepped portion 1b of small diameter of the hub wheel 1 after the inner ring 6 having being press fitted onto the stepped portion 1b. The double row rolling bearing 2 is formed as a unit with axially secure the inner ring 6 relative to the hub wheel 1 by the caulked portion 12. Due to this united structure of the bearing apparatus, it is possible to provide a bearing apparatus for a wheel of vehicle of third generation having a so-called self-retaining structure which can control the preload of the bearing 2 without using any fastening means such as a nut. The illustrated ball rolling elements 7 and 7 may be replaced for example by conical rolling elements.

The constant velocity universal joint 3 comprises the outer joint member 4, an inner joint member (not shown), torque transmitting balls contained between the inner and outer joint members, and the cages for holding the torque transmitting balls equidistantly along a circle. The outer joint member 4 comprises a cup-shaped mouth portion 13, a shoulder 14 forming the bottom of the mouth portion 13, and a stem portion 15 axially extending from the shoulder 14. Serrations (splines) 16 are formed on the outer peripheral surface of the stem portion 15 and a male thread 17 is formed on the end of the stem.

Torque can be transmitted between the outer joint member 4 and the hub wheel 1 by engaging the serrations 9 of the hub wheel 1 with the serrations 16 of the stem portion with inserting the stem portion 15 into the hub wheel 1. The constant velocity universal joint 3 can be detachably secured to the double row rolling bearing 2 by fastening the end of the stem portion 15 via a nut 18 with the end face of the shoulder 14 being abutted to the caulked portion 12 of the hub wheel 1.

The hub wheel 1 is made of medium carbon steel such as S53C including carbon of 0.40 ∼ 0.80 % by weight and heat treated as hereinafter described after hot forging and finally formed to a predetermined configuration and dimension by lathe turning. The base portion of the wheel mounting flange 10 at the outboard side, i.e. a corner 21 extending from the brake rotor mounting surface 19 to a pilot portion 20 forming a supporting surface of the brake rotor (not shown) is formed as a circular arc (or an undercut) having a radius of curvature not causing an interference of the brake rotor.

The hub wheel 1 is heat treated so that the material forming the hub wheel is tempered at high temperature above 400°C after forging to change the metallographic structure to troostite or sorbite. The metallographic structure of the hub wheel 1 is granulated by this heat treatment and thus the ductility and toughness is increased due to increase of mechanical characteristics such as tension, bending and impact values. Although it is known that the mechanical strength can be increased by increasing the surface hardness, the surface hardness of the hub wheel 1 after the heat treatment is suppressed below 35 HRC in this embodiment. The reason of which is that if the surface hardness of the hub wheel 1 is set above 35 HRC, the cutting workability is lowered and the deformation due to heat treatment becomes large and therefore the accuracy of surface run-out of the brake rotor mounting surface of the wheel mounting flange 10 is lowered as well as the life of a bite is shortened due to increase of surface hardness. Other reasons are that the surface hardness of bolt apertures 11a into which hub bolts 11 are inserted approach the hardness of the hub bolts 11 and thus the serrations of the hub volts 11 would be destroyed.

In addition, if the surface hardness of the hub wheel 1 at the inboard side is set above 35 HRC, micro-cracks would be caused on the surface of the caulked portion 12 when it is formed by plastic deformation. It is preferable to set the surface hardness low in view of plastic working and thus the reliability of the caulked portion 12 is improved by setting its surface hardness below 25 HRC by carrying out high frequency tempering after the heat treatment of the caulked portion 12. Furthermore, this makes it possible to suppress hardness variation in the caulked portion as compared with portions not heat treated after forging as in the prior art. In addition it is possible to improve its quality with reducing micro-crack which would be generated by plastic working.

This enables to strengthen the corner of the flange at which the rotary bending strength is most weakened and thus to increase the durability of the hub wheel using current method and facility without change the configuration and dimension of the wheel mounting flange 10. It is possible to further improve the accuracy of the surface run-out of the brake rotor mounting surface 19 by carrying out the lathe turning after forging and heat treatment processes.

Although it has described that the heat treatment of the hub wheel 1 after forging is carried out by the all surface heat treatment method in which heat treatment of the hub wheel 1 is carried out in a heat treatment furnace it is possible to adopt the partial surface heat treatment in which for example only the inboard side end of the hub wheel 1 corresponding to the caulked portion 12 as well as the corner 21 of the wheel mounting flange 10 are heated by the high frequency induction hardening. In this case, it is unnecessary to consider the workability such as easiness of cutting and it is possible to set the surface hardness of predetermined portions at desired hardness, for example, set the surface hardness of the corner 21 below 40 HRC and that of the caulked portion 12 below HRC 25.

The hub wheel 1 is formed with hardened layer 23 (shown by cross-hatching in drawings) having a surface hardness 54 - 64 HRC by high frequency induction hardening at the inner raceway surface 1a of outboard side, a seal land portion 22 with which a sealing means 8 contacts, and the stepped portion 1b of small diameter. Thus the seal land portion 22 can not only have an improved wear resistance but give a large mechanical strength of the hub wheel 1 against the rotary bending load applied to the wheel mounting flange 10. The inner ring 6 is made of high carbon chrome bearing steel such as SUJ 2 and is hardened to its core by dipping quenching to have the surface hardness of HRC 54 - 64.

On the other hand, the outer member 5 is made of medium carbon steel including carbon of 0.40 ∼ 0.80 % by weight such as S53C. The double row outer raceway surfaces 5a and 5a as well as the inner peripheral surface at ends into which sealing means 8 and 8 are fitted are hardened by high frequency induction quenching to have a surface hardness of 54 - 64 HRC.

Although it is described that manufacturing method of the hub wheel 1 has steps of forging→heat treatment→lathe turning→high frequency induction quenching, it is possible to appropriately change the order in accordance with the manufacturing line structure, for example, as steps of forging→lathe turning-heat treatment-high frequency induction quenching.

Fig. 2 is a longitudinal view showing a second embodiment of the bearing apparatus for a wheel of the present invention. This embodiment shows a bearing apparatus for a wheel of first generation. Same reference numerals are used for designating same parts having same functions used in the first embodiment..

The bearing apparatus for a wheel comprises, as its main components, hub wheel 25 for securing the brake rotor 24 and a wheel (not shown), the bearing 28 for a wheel having the double row rolling elements (balls) 7 and 7 freely rollably contained between the inner and outer wheel 27 and 26, a knuckle 29 for supporting the bearing 28 on the body of vehicle, and the constant velocity universal joint 3 connected to the hub wheel 25 for transmitting a power of drive shaft (not shown) to the hub wheel 25. The illustrated ball rolling elements 7 and 7 may be replaced for example by conical rolling elements.

The outer wheel 26 of the bearing 28 is fitted in the knuckle 29 and axially secured therein by a snap ring 30. On the other hand, a pair of inner ring 27 and 27 are press fitted onto the cylindrical stepped portion 31 of small diameter formed on the hub wheel 25. The constant velocity universal joint 3 is detachably secured to the bearing 28 by fastening the end of the stem portion 15 via a nut 18 with the end of larger diameter of the inner ring 27 of inboard side being abutted to the shoulder 14.

The hub wheel 25 is made of medium carbon steel such as S53C including carbon of 0.40 ∼ 0.80 % by weight and all-surface heat treated after hot forging below 35 HRC. This enables to strengthen the corner 21 of the flange at which the rotary bending strength is most weakened without change the configuration and dimension of the wheel mounting flange 10.

The base portion 32 of inboard side of the wheel mounting flange 10 of the hub wheel 25 has a radius of curvature defined as large as possible and is formed with hardened layer 23 (shown by cross-hatching in drawings) having a surface hardness 54 ∼ 64 HRC by high frequency induction hardening from the base portion 32 to the stepped portion 31 of small diameter. Thus the hub wheel 25 has a sufficiently large mechanical against the rotary bending load applied to the wheel mounting flange 10.

The pair of inner rings 27 and 27 are made of high carbon chrome bearing steel such as SUJ 2 and is hardened to its core by dipping quenching to have the surface hardness of HRC 54 - 64. The provision of the predetermined hardened layer 23 makes it possible to suppress at lowermost level the fretting wear caused on the fitted surfaces between the stepped portion 31 of small diameter and the inner rings 27 and 27. Accordingly, generation of rust, wear or scratch which would be caused by the fretting wear at the fitted surfaces of the inner ring 27 and 27 is also prevented and thus the durability of the inner rings is improved. The surfaces of serrations 9 formed on the inner peripheral surface of the hub wheel 25 are also formed with hardened layer 23 (shown by cross-hatching in drawings) having a surface hardness 54 ∼ 64 HRC by high frequency induction hardening. Thus the wear resistance of the serrations 9 is improved and the effective length of serrations 9 can be reduced owing to its increase of strength. This contributes to miniaturization and lightening of the hub wheel 25. On the other hand, the inner ring 6 is made of high carbon chrome bearing steel such as SUJ 2 and is hardened to its core by dipping quenching to have the surface hardness of HRC 54 ∼ 64.

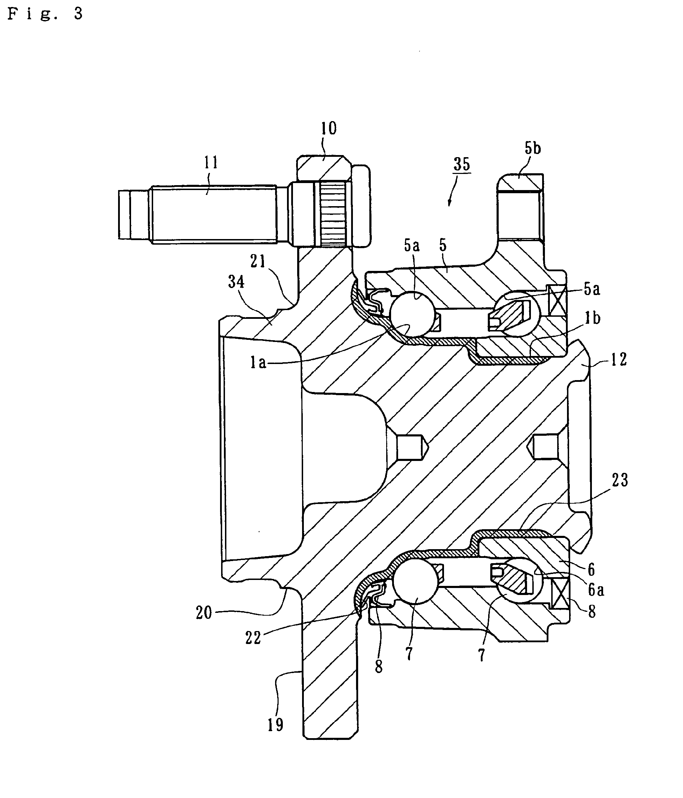

Fig. 3 is a longitudinal view showing a second embodiment of the bearing apparatus for a wheel of the present invention. This embodiment shows a bearing apparatus for a wheel of third generation. Same reference numerals are used for designating same parts having same functions used in the first embodiment..

The bearing apparatus is that used for a driven wheel and has a unit construction wherein the hub wheel 34 and a double row rolling bearing 35 are assembled as a unit. The double row rolling bearing 35 comprises, as its main components, the outer member 5, the hub wheel 34, the inner ring 6 press fitted onto the stepped portion 1b of small diameter of the hub wheel 34, and the double row rolling elements 7 and 7.

In this bearing apparatus, a caulked portion 12 is formed by plastically deforming radially outward the end of the stepped portion 1b of small diameter of the hub wheel 34 after the inner ring 6 having being press fitted onto the stepped portion 1b. The double row rolling bearing 35 is formed as a unit with axially secure the inner ring 6 relative to the hub wheel 34 by the caulked portion 12. Due to this united structure of the bearing apparatus, it is possible to provide a bearing apparatus for a wheel of vehicle of third generation having a so-called self-retaining structure which can control the preload of the bearing 35 without using any fastening means such as a nut.

The hub wheel 34 is made of medium carbon steel such as S53C including carbon of 0.40 ∼ 0.80 % by weight and all-surface heat treated after hot forging and the surface hardness is set below 35 HRC. This enables to strengthen the corner of the flange at which the rotary bending strength is most weakened and thus to increase the durability of the hub wheel without change the configuration and dimension of the wheel mounting flange 10.

The base portion of inboard side of the wheel mounting flange 10 of the hub wheel 34 forms the seal land portion 22 of the outboard side seal 8 and its radius of curvature is defined as large as possible. The hardened layer 23 (shown by cross-hatching in drawings) having a surface hardness 54 ∼ 64 HRC by high frequency induction hardening is formed from the seal land portion 22 to the stepped portion 1b of small diameter. Thus the wear resistance of the seal land portion 22 is increased. Thus the seal land portion 22 has a sufficiently large mechanical against the rotary bending load applied to the wheel mounting flange 10 and thus the durability of the hub wheel 34 is improved.

Although it is shown in this third embodiment that the hub wheel 34 is integrally formed with the wheel mounting flange 10, it is of course that the third embodiment is applicable to a bearing apparatus of outer ring rotation type wherein the wheel mounting flange 10 is integrally formed with the outer member.

As described above, according to the present invention, since the bearing apparatus for a wheel of vehicle comprises an outer member formed with double row outer raceway surfaces on the inner peripheral surface thereof, an inner member formed with double row inner raceway surfaces arranged oppositely to the double row outer raceway surfaces, double row rolling elements contained freely rollably between the outer and inner raceway surfaces respectively of the outer and inner members, and a wheel mounting flange formed integrally with either one of the outer member or the inner member, wherein at least one of the outer member and the inner member on which the wheel mounting flange is formed is heat treated and their raceway surfaces are hardened by quenching to a predetermined surface hardness, it is possible to ensure a desired bearing life and also to increase the strength and durability of the hub wheel against the rotary bending fatigue using current method and facility without change the configuration and dimension of the wheel mounting flange.

Further, since the bearing apparatus for a wheel of vehicle comprises an outer member formed with double row outer raceway surfaces on the inner peripheral surface thereof, an inner member formed with double row inner raceway surfaces arranged oppositely to the double row outer raceway surfaces, double row rolling elements contained freely rollably between the outer and inner raceway surfaces respectively of the outer and inner members, and a wheel mounting flange formed integrally with either one of the outer member or the inner member and is characterized in that the base portion of outboard side of the wheel mounting flange is heat treated and its the surface hardness is set at 40 HRC or less, it is unnecessary to consider the cutting workability such as lathe turning and possible to improve the mechanical strength of the base portion of the wheel mounting flange.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims.

## Claims

1. A bearing apparatus for a wheel of vehicle comprising an outer member (5) formed with double row outer raceway surfaces (5a) on the inner peripheral surface thereof, an inner member formed with double row inner raceway surfaces (1a) arranged oppositely to the double row outer raceway surfaces (5a), double row rolling elements (7) contained freely rollably between the outer and inner raceway surfaces (1a,5a) respectively of the outer and inner members, and a wheel mounting flange (10) formed integrally with either one of the outer member (5) or the inner member, wherein at least one of the outer member (5) and the inner member on which the wheel mounting flange (10) is formed is heat treated and their raceway surfaces (1a,5a) are hardened by quenching to a predetermined surface hardness **characterized in that** the inner member comprises a hub wheel (1,25,34) of which all surface is heat treated after forging.

2. A bearing apparatus for a wheel of vehicle of claim 1 wherein the inner member comprises a hub wheel having the wheel mounting flange (10) and an inner ring (6) press fitted onto the hub wheel (25), an inner raceway surface (1a) corresponding to one of the double row outer raceway surfaces (5a) of the outer member (5) is directly formed on the outer peripheral surface of the hub wheel (25), and another inner raceway surface (6a) corresponding to the other of the double row outer raceway surfaces (5a) of the outer member (5) is formed on the outer peripheral surface of the inner ring (6).

3. A bearing apparatus for a wheel of vehicle of claim 1 or 2 wherein the surface hardness of the base portion of outboard side of the wheel mounting flange (10) is set below 35 HRC.

4. A bearing apparatus for a wheel of vehicle of claim 2 or 3 wherein the end of inboard side of the hub wheel (25) is plastically deformed radially outward to form a caulked portion (12) for axially securing the inner ring (6) relative to the hub wheel (25).

5. A bearing apparatus for a wheel of vehicle of claim 4 wherein the surface hardness of the caulked portion (12) is set below 25 HRC by tempering it after the heat treatment thereof.

6. A bearing apparatus for a wheel of vehicle of any one of claims 2 through 5 wherein seals (8) are arranged on two ends of the outer member (5), the base portion of inboard side of the wheel mounting flange (10) is formed with a seal land portion (22) to which a seal lip of the seal of outboard side slidably contacts, and the surface hardness of the seal land portion (22) is set at 54 ∼ 64 HRC.

7. A bearing apparatus for a wheel of vehicle of any one of claims 1 through 6 wherein the inner member and the outer member (5) to be heat treated are made of medium carbon steel including carbon of 0.40 ∼ 0.80 % by weight.

8. A bearing apparatus for a wheel of vehicle of claim 2 wherein seals (8) are arranged on two ends of the outer member (15), the base portion of inboard side of the wheel mounting flange (10) is formed with a seal land portion (22) to which a seal lip of the seal (8) of outboard side slidably contacts, and the surface hardness of the seal land portion (22) is set at 54-64 HRC.

9. A bearing apparatus for a wheel of vehicle of claim 8 wherein the inner member and the outer member (5) to be heat treated are made of medium carbon steel including carbon of 0.40 ∼ 0.80 % by weight.

## Patentansprüche

1. Lagervorrichtung für ein Fahrzeugrad, umfassend ein Außenelement (5), das an seiner inneren Umfangsfläche mit doppelreihigen äußeren Laufringflächen (5a) ausgebildet ist, ein Innenelement, das mit doppelreihigen inneren Laufringflächen (1a) ausgebildet ist, die den doppelreihigen äußeren Laufringflächen (5a) gegenüberliegend angeordnet sind, eine Doppelreihe von Wälzelementen (7), die frei rollfähig zwischen den äußeren und inneren Laufringflächen (1a, 5a) des Außen- bzw. Innenelements aufgenommen sind, und einen Radbefestigungsflansch (10), der an das Außenelement (5) oder das Innenelement angeformt ist, wobei das Außenelement (5) und/oder das Innenelement, an dem der Radbefestigungsflansch (10) ausgebildet ist, wärmebehandelt ist und seine Laufringflächen (1a, 5a) durch Abschrecken auf eine vorbestimmte Oberflächenhärte gehärtet sind, **dadurch gekennzeichnet, dass** das Innenelement eine Nabe (1, 25, 34) umfasst, deren gesamte Oberfläche nach dem Schmieden wärmebehandelt wurde.

2. Lagervorrichtung für ein Fahrzeugrad nach Anspruch 1, wobei das Innenelement eine Nabe mit dem Radbefestigungsflansch (10) und einen Innenring (6), der auf die Nabe (25) aufgepresst ist, aufweist, eine innere Laufringfläche (1a), die einer der doppelreihigen äußeren Laufringflächen (5a) des Außenelements (5) entspricht, direkt an der äußeren Umfangsfläche der Nabe (25) gebildet ist und eine weitere innerer Laufringfläche (6a), die der anderen der doppelreihigen äußeren Laufringflächen (5a) des Außenelements (5) entspricht, an der äußeren Umfangsfläche des Innenrings (6) gebildet ist.

3. Lagervorrichtung für ein Fahrzeugrad nach Anspruch 1 oder 2, wobei die Oberflächenhärte des Basisteils der außenliegenden Seite des Radbefestigungsflansches (10) auf unter 35 HRC festgelegt ist.

4. Lagervorrichtung für ein Fahrzeugrad nach Anspruch 2 oder 3, wobei das Ende der innenliegenden Seite der Nabe (25) radial auswärts plastisch verformt, um einen verstemmten Teil (12) zum axialen Befestigen des Innenrings (6) in Bezug auf die Nabe (25) zu bilden.

5. Lagervorrichtung für ein Fahrzeugrad nach Anspruch 4, wobei die Oberflächenhärte des verstemmten Teils (12) durch Anlassen nach seiner Wärmebehandlung auf unter 25 HRC festgelegt ist.

6. Lagervorrichtung für ein Fahrzeugrad nach einem der Ansprüche 2 bis 5, wobei an zwei Enden des Außenelements (5) Dichtungen (8) angeordnet sind, der Basisteil der innenliegenden Seite des Radbefestigungsflansches (10) mit einem Dichtungsanlageteil (22) ausgebildet ist, an dem eine Dichtungslippe der Dichtung der außenliegenden Seite gleitfähig in Anlage ist, und die Oberflächenhärte des Dichtungsanlageteils (22) auf 54 bis 64 HRC festgelegt ist.

7. Lagervorrichtung für ein Fahrzeugrad nach einem der Ansprüche 1 bis 6, wobei das zur Wärmebehandlung vorgesehene Innenelement und Außenelement (5) aus Stahl mit mittlerem Kohlenstoffgehalt mit 0,40 bis 0,80 Gewichtsprozent Kohlenstoff hergestellt sind.

8. Lagervorrichtung für ein Fahrzeugrad nach Anspruch 2, wobei an zwei Enden des Außenelements (15) Dichtungen (8) angeordnet sind, der Basisteil der innenliegenden Seite des Radbefestigungsflansches (10) mit einem Dichtungsanlageteil (22) versehen ist, an dem eine Dichtungslippe der Dichtung (8) der außenliegenden Seite gleitfähig in Anlage ist, und die Oberflächenhärte des Dichtungsanlageteils (22) auf 54 bis 64 HRC festgelegt ist.

9. Lagervorrichtung für ein Fahrzeugrad nach Anspruch 8, wobei das zur Wärmebehandlung vorgesehene Innenelement und Außenelement (5) aus Stahl mit mittlerem Kohlenstoffgehalt mit 0,40 bis 0,80 Gewichtsprozent Kohlenstoff hergestellt sind.

## Revendications

1. Dispositif de roulement pour la roue d'un véhicule, comprenant un élément extérieur (5) formé de surfaces de chemin de roulement extérieures, à double rangée (5a) sur sa surface périphérique interne, un élément intérieur formé de surfaces de chemin de roulement intérieures, à double rangée (1a), disposées de manière opposée aux surfaces de chemin de roulement extérieures, à double rangée (5a), des éléments de roulement à double rangée (7) présents de telle sorte qu'ils puissent rouler librement, entre les surfaces de chemins de roulement extérieur et intérieur (1a, 5a), respectivement sur les éléments extérieur et intérieur, et une bride de montage de la roue (10), formé d'une pièce avec l'un des membres extérieur (5) et intérieur, où au moins l'un parmi le membre extérieur (5) et le membre intérieur sur lequel la bride de montage de la roue (10) est formé, est traité thermiquement et leurs surfaces de chemin de roulement (1a, 5a) sont durcies par trempe jusqu'à une dureté de surface prédéterminée, **caractérisé en ce que** le membre intérieur comprend un moyeu (1, 25, 34) dont toutes les surfaces sont traitées thermiquement après le forgeage.

2. Dispositif de roulement pour roue de véhicule selon la revendication 1, où l'élément intérieur comprend un moyeu ayant la bride de montage de roue (10) et une bague interne (6) emmanchée sur le moyeu (25), une surface de chemin de roulement intérieure (1a) correspondant à l'une des surfaces de chemin de roulement extérieures, à double rangée (5a) de l'élément extérieur (5) est formée directement sur la surface périphérique extérieure du moyeu (25), et une autre surface de chemin de roulement intérieure (6a) correspondant à l'autre des surfaces de chemin de roulement extérieures, à double rangée (5a) de l'élément extérieur (5) est formée sur la surface périphérique extérieure de la bague interne (6).

3. Dispositif de roulement pour roue de véhicule selon la revendication 1 ou 2, où la dureté de surface de la partie de base du côté extérieur de la bride de montage de la roue (10) est ajustée sous 35 HRC.

4. Dispositif de roulement pour roue de véhicule selon la revendication 2 ou 3, où l'extrémité du côté intérieur du moyeu (25) est déformé de manière plastique et de manière radiale vers l'extérieur pour former une partie matée (12) pour la fixation axiale de la bague interne (6) par rapport au moyeu (25).

5. Dispositif de roulement pour roue de véhicule selon la revendication 4, où la dureté de surface de la partie matée (12) est ajustée sous 25 HRC par trempe après traitement thermique.

6. Dispositif de roulement pour roue de véhicule selon l'une quelconque des revendications 2 à 5, où des joints (8) sont disposés sur deux extrémités de l'élément extérieur (5), la partie de base du côté intérieur de la bride de montage de la roue (10) est formée d'une partie d'assise du joint (22), avec laquelle une lèvre de joint du joint du côté extérieur entre en contact de manière à pouvoir glisser, et la dureté de surface de la partie d'assise de joint (22) est ajustée à 54-64 HRC.

7. Dispositif de roulement pour roue de véhicule selon l'une quelconque des revendications 1 à 6, où l'élément intérieur et l'élément extérieur (5) à traiter thermiquement sont composés d'un acier à teneur moyenne en carbone, comprenant 0,40-0,80% en poids de carbone.

8. Dispositif de roulement pour roue de véhicule selon la revendication 2, où les joints (8) sont disposés sur deux extrémités de l'élément extérieur (15), la partie de base du côté intérieur de la bride de montage de la roue (10) est formée d'une partie d'assise de joint (22), avec laquelle une lèvre de joint du joint (8) du côté extérieur entre en contact de manière à pouvoir glisser, et la dureté de surface de la partie d'assise de joint (22) est ajustée à 54-64 HRC.

9. Dispositif de roulement pour roue de véhicule selon la revendication 8, où l'élément intérieur et l'élément extérieur (5) à traiter thermiquement sont composés d'un acier à teneur moyenne en carbone, comprenant 0,40-0,80% en poids de carbone.
